# EUROPEAN PATENT APPLICATION

(11) **EP 4 783 646 A1**
(43) Date of publication of application: **29.07.2026**
(21) Application number: 24881181.2
(22) Date of filing: 09.08.2024
(51) Int. Cl.: H04W 24/02

(54) **INTER-FREQUENCY MEASUREMENT METHOD AND APPARATUS**

(30) Priority: 27.10.2023 CN 202311422986
(71) Applicant: HUAWEI TECHNOLOGIES CO., LTD., Shenzhen 518129 (CN)
(72) Inventor: PANG, Xu, Shenzhen, Guangdong 518129 (CN); CAO, Youlong, Shenzhen, Guangdong 518129 (CN); FU, Yu, Shenzhen, Guangdong 518129 (CN); XU, Rui, Shenzhen, Guangdong 518129 (CN); QIN, Yi, Shenzhen, Guangdong 518129 (CN)
(74) Representative: Gill Jennings & Every LLP
(86) International application number: PCT/CN2024/111156
(87) International publication number: WO 2025/086812

(57) **Abstract**

An inter-frequency measurement method and apparatus are provided. The method includes: A terminal receives first configuration information from an access network device, where the first configuration information is used to configure a measurement gap MG; the terminal sends a first negative acknowledgement NACK to the access network device, where the first NACK indicates a reception error of first downlink data; and the terminal skips inter-frequency measurement in an MG of first duration after the first NACK is sent. In the first duration after the terminal sends the first NACK to the access network device, the terminal may receive the retransmitted first downlink data. In the MG of the first duration after the first NACK is sent, the terminal skips inter-frequency measurement. This can ensure the terminal's reception of the retransmitted first downlink data, and ensure reliability of a terminal service.

## Description

### CROSS-REFERENCE TO RELATED APPLICATIONS

This application claims priority to Chinese Patent Application No. 202311422986.7, filed with the China National Intellectual Property Administration on October 27, 2023 and entitled "INTER-FREQUENCY MEASUREMENT METHOD AND APPARATUS", which is incorporated herein by reference in its entirety.

### TECHNICAL FIELD

This application relates to the field of communication technologies, and in particular, to an inter-frequency measurement method and apparatus.

### BACKGROUND

With continuous development of wireless communication systems, data transmission latency is steadily reduced, and transmission capacities are increasing. The wireless communication systems are gradually penetrating services with stringent real-time requirements and high data-rate requirements, such as video transmission, cloud gaming (cloud gaming, CG), and extended reality (extended reality, XR). XR refers to an interactive environment, created by computer technologies and wearable devices, that combines real and virtual elements. XR is a collective term encompassing various forms such as augmented reality (augmented reality, AR) and virtual reality (virtual reality, VR). XR services are used as an example. Time when a terminal receives retransmitted downlink data corresponding to the XR services may overlap or conflict with a measurement gap (measurement gap, MG) used for inter-frequency measurement. Therefore, how the terminal performs inter-frequency measurement in this case is a research direction.

### SUMMARY

Embodiments of this application provide an inter-frequency measurement method and apparatus, to implement inter-frequency measurement of a terminal.

According to a first aspect, a communication method is provided. The method is performed by a terminal or a module (for example, a chip or a circuit) in the terminal. An example in which the terminal is an execution body is used. The method includes: The terminal receives first configuration information from an access network device, where the first configuration information is used to configure a measurement gap MG; the terminal sends a first negative acknowledgement NACK to the access network device, where the first NACK indicates a reception error of first downlink data; and the terminal skips inter-frequency measurement in an MG of first duration after the first NACK is sent.

According to the foregoing design, in a downlink communication scenario, when the reception error of the first downlink data occurs, the terminal sends the first NACK to the access network device. In a subsequent period of time (where the period of time is the first duration), the first downlink data is preferably retransmitted. For example, the access network device retransmits the first downlink data to the terminal in the first duration. The terminal may receive the retransmitted first downlink data in the first duration. The terminal does not perform inter-frequency measurement in the MG of the first duration, thereby ensuring reception of the retransmitted downlink data, and ensuring reliability of a terminal service.

In a design, the first duration is equal to a sum of duration of a first timer and duration of a second timer, physical downlink control channel PDCCH monitoring is skipped during a running period of the first timer, and PDCCH monitoring is performed during a running period of the second timer. Further, during running of the second timer, when the terminal detects its own PDCCH, the terminal may receive the retransmitted first downlink data according to scheduling of the PDCCH. For example, the PDCCH includes downlink control information, and the downlink control information is used to schedule downlink data retransmission of the terminal.

In a design, the first duration is less than a sum of duration of a first timer and duration of a second timer, PDCCH monitoring is skipped during a running period of the first timer, and PDCCH monitoring is performed during a running period of the second timer.

According to the foregoing design, during running of the second timer, if the terminal correctly receives the retransmitted first downlink data, the terminal immediately resumes inter-frequency measurement in the MG after sending a first ACK to the access network device, without waiting until the second timer expires before resuming inter-frequency measurement in the MG. This ensures that the terminal retransmits data, and reduces waiting time of inter-frequency measurement performed by the terminal.

In a design, the method further includes: Upon transmission of the first NACK to the access network device, the terminal starts the first timer; and upon expiry of the first timer, the terminal starts the second timer.

In a design, the first duration is equal to duration of a third timer, and the duration of the third timer is predefined, or is configured by the access network device.

In a design, the first duration is less than duration of a third timer, and the duration of the third timer is predefined, or is configured by the access network device.

According to the foregoing design, during running of the third timer, if the terminal correctly receives the retransmitted first downlink data, the terminal immediately resumes inter-frequency measurement in the MG after sending a first ACK to the access network device, without waiting until the third timer expires before resuming inter-frequency measurement in the MG. This ensures that the terminal retransmits data, and reduces waiting time of inter-frequency measurement performed by the terminal.

In a design, the method further includes: Upon transmission of the first NACK to the access network device, the terminal starts the third timer.

According to a second aspect, a peer-end method corresponding to the first aspect is provided. For beneficial effects, refer to the descriptions of the first aspect. A communication method is provided. The method is performed by an access network device, or a module (for example, a chip or a circuit) in the access network device, or a logical node, a logical module, or software that can implement all or some functions of the access network device. An example in which the access network device is an execution body is used. The method includes: The access network device sends first configuration information to a terminal, where the first configuration information is used to configure a measurement gap MG; the access network device receives a first negative acknowledgement NACK from the terminal, where the first NACK indicates a reception error of first downlink data; and the access network device retransmits the first downlink data to the terminal in first duration after the first NACK is received.

In a design, the first duration is equal to a sum of duration of a first timer and duration of a second timer, physical downlink control channel PDCCH monitoring is skipped during a running period of the first timer, and PDCCH monitoring is performed during a running period of the second timer.

In a design, the first duration is less than a sum of duration of a first timer and duration of a second timer, PDCCH monitoring is skipped during a running period of the first timer, and PDCCH monitoring is performed during a running period of the second timer.

In a design, the method further includes: Upon reception of the first NACK from the terminal, the access network device starts the first timer; and upon expiry of the first timer, the access network device starts the second timer.

In a design, the first duration is equal to duration of a third timer, and the duration of the third timer is predefined, or is configured by the access network device.

In a design, the first duration is less than duration of a third timer, and the duration of the third timer is predefined, or is configured by the access network device.

In a design, the method further includes: Upon reception of the first NACK from the terminal, the access network device starts the third timer.

According to a third aspect, a communication method is provided. The method is performed by a terminal or a module (for example, a chip or a circuit) in the terminal. An example in which the terminal is an execution body is used. The method includes: The terminal receives second configuration information from an access network device, where the second configuration information is used to configure a measurement gap MG; the terminal sends a second negative acknowledgement NACK to the access network device, and starts a fourth timer, where physical downlink control channel PDCCH monitoring is skipped during a running period of the fourth timer, and the second NACK indicates a reception error of second downlink data; upon expiry of the fourth timer, the terminal starts a fifth timer, where PDCCH monitoring is performed during a running period of the fifth timer; and the terminal skips inter-frequency measurement in an MG of second duration after the fifth timer is started.

According to the foregoing design, in a downlink communication scenario, when the reception error of the second downlink data occurs, the terminal sends the second NACK to the access network device, and the terminal starts the fourth timer. During running of the fourth timer, the terminal does not monitor the PDCCH. Upon expiry of the fourth timer, the terminal starts the fifth timer. In the MG of the second duration after the fifth timer is started, the terminal does not perform inter-frequency measurement, thereby ensuring retransmission of the downlink data, and ensuring reliability of a terminal service.

In a design, the second duration is equal to duration of the fifth timer.

In a design, the second duration is less than duration of the fifth timer.

According to the foregoing design, during running of the fifth timer, when the terminal receives the retransmitted second downlink data, if the retransmitted second downlink data is correctly received, the terminal sends a second ACK to the access network device. Then, the terminal may normally perform inter-frequency measurement based on the MG, without waiting until the fifth timer expires before performing inter-frequency measurement. This ensures that the terminal retransmits data, and reduces waiting time of inter-frequency measurement performed by the terminal.

In a design, the second duration is equal to duration of a sixth timer, and the duration of the sixth timer is predefined, or is configured by the access network device.

In a design, the second duration is less than duration of a sixth timer, and the duration of the sixth timer is predefined, or is configured by the access network device.

According to the foregoing design, in a downlink communication scenario, the terminal does not need to wait until the sixth timer expires before performing inter-frequency measurement. During running of the sixth timer, if the terminal sends a second ACK to the access network device, the terminal may perform inter-frequency measurement immediately after the terminal sends the second ACK. The terminal preferentially receives the retransmitted downlink data, thereby ensuring transmission of the retransmitted data, and further reducing waiting time of inter-frequency measurement performed by the terminal.

In a design, the method further includes: Upon starting of the fifth timer, the terminal starts the sixth timer.

According to a fourth aspect, a peer-end method corresponding to the third aspect is provided. For beneficial effects, refer to the descriptions of the third aspect. A communication method is provided. The method is performed by an access network device, or a module (for example, a chip or a circuit) in the access network device, or a logical node, a logical module, or software that can implement all or some functions of the access network device. An example in which the access network device is an execution body is used. The method includes: The access network device sends second configuration information to a terminal, where the second configuration information is used to configure a measurement gap MG; the access network device receives a second negative acknowledgement NACK from the terminal, and starts a fourth timer, where physical downlink control channel PDCCH monitoring is skipped during a running period of the fourth timer, and the second NACK indicates a reception error of second downlink data; upon expiry of the fourth timer, the access network device starts a fifth timer, where PDCCH monitoring is performed during a running period of the fifth timer; and the access network device retransmits the second downlink data to the terminal in second duration after the fifth timer is started.

In a design, the second duration is equal to duration of the fifth timer.

In a design, the second duration is less than duration of the fifth timer.

In a design, the second duration is equal to duration of a sixth timer, and the duration of the sixth timer is predefined, or is configured by the access network device.

In a design, the second duration is less than duration of a sixth timer, and the duration of the sixth timer is predefined, or is configured by the access network device.

In a design, the method further includes: Upon starting of the fifth timer, the access network device starts the sixth timer.

According to a fifth aspect, an apparatus is provided. The apparatus can implement the method according to the first aspect or the third aspect. For example, the apparatus includes a corresponding means (means) for performing the first aspect or the third aspect. The apparatus may be implemented by hardware, implemented by software, or implemented by hardware executing corresponding software.

In a design, the apparatus includes a unit that performs the first aspect or the third aspect.

In a design, the apparatus includes a processor, and the processor is configured to perform the method according to the first aspect or the third aspect.

In a design, the apparatus includes a processor and an interface circuit. The interface circuit is configured to: receive a signal from an apparatus other than the apparatus and transmit the signal to the processor, or send a signal from the processor to an apparatus other than the apparatus. The processor is configured to implement the method according to the first aspect or the third aspect through a logic circuit or by executing code instructions.

In a design, the apparatus includes a processor and a memory. The processor is configured to execute a computer program or instructions stored in the memory, to enable the apparatus to implement the method according to the first aspect or the third aspect.

In a design, the apparatus may be a first apparatus, or may be a module or a unit (for example, a chip, a chip system, or a circuit) that is in the first apparatus and that is in one-to-one correspondence with the method/operation/step/action described in the first aspect or the third aspect, or may be used in matching with the first apparatus.

According to a sixth aspect, an apparatus is provided. The apparatus can implement the method according to the second aspect or the fourth aspect. For example, the apparatus includes a corresponding means (means) for performing the second aspect or the fourth aspect. The apparatus may be implemented by hardware, implemented by software, or implemented by hardware executing corresponding software.

In a design, the apparatus includes a unit that performs the second aspect or the fourth aspect.

In a design, the apparatus includes a processor, and the processor is configured to perform the method according to the second aspect or the fourth aspect.

In a design, the apparatus includes a processor and an interface circuit. The interface circuit is configured to: receive a signal from an apparatus other than the apparatus and transmit the signal to the processor, or send a signal from the processor to an apparatus other than the apparatus. The processor is configured to implement the method according to the second aspect or the fourth aspect through a logic circuit or by executing code instructions.

In a design, the apparatus includes a processor and a memory. The processor is configured to execute a computer program or instructions stored in the memory, to enable the apparatus to implement the method according to the second aspect or the fourth aspect.

In a design, the apparatus may be a second apparatus, or may be a module or a unit (for example, a chip, a chip system, or a circuit) that is in the second apparatus and that is in one-to-one correspondence with the method/operation/step/action described in the second aspect or the fourth aspect, or may be used in matching with the second apparatus.

According to a seventh aspect, a computer-readable storage medium is provided, storing a computer program or instructions. When the computer program or the instructions are run on a computer, the computer is enabled to implement the method according to any one of the first aspect to the fourth aspect.

According to an eighth aspect, a computer program product is provided, and includes a computer program or instructions. When the computer program or the instructions are run by a computer, the method according to any one of the first aspect to the fourth aspect is performed.

According to a ninth aspect, a chip is provided, and includes a processor. The processor is coupled to a memory, and is configured to execute a computer program or instructions stored in the memory, to enable the chip to implement the method according to any one of the first aspect to the fourth aspect.

According to a tenth aspect, a communication system is provided, and includes a first communication apparatus and a second communication apparatus. The first communication apparatus is configured to implement the method according to the first aspect, and the second communication apparatus is configured to implement the method according to the second aspect; or the first communication apparatus is configured to implement the method according to the third aspect, and the second communication apparatus is configured to implement the method according to the fourth aspect.

### BRIEF DESCRIPTION OF DRAWINGS

FIG. 1 is a diagram of an architecture of a communication system according to an embodiment of this application;
FIG. 2 is a diagram of an XR service and an MG according to an embodiment of this application;
FIG. 3 is a schematic flowchart according to an embodiment of this application;
FIG. 4 is a diagram of an MG according to an embodiment of this application;
FIG. 5 is a diagram of a DRX cycle according to an embodiment of this application;
FIG. 6 is a diagram of a timer in a DRX mechanism according to an embodiment of this application;
FIG. 7 to FIG. 9 are diagrams of first duration according to embodiments of this application;
FIG. 10 is another schematic flowchart according to an embodiment of this application;
FIG. 11 and FIG. 12 are diagrams of second duration according to embodiments of this application; and
FIG. 13 and FIG. 14 are diagrams of structures of apparatuses according to embodiments of this application.

### DESCRIPTION OF EMBODIMENTS

To make the objectives, technical solutions, and advantages of this application clearer, the following further describes this application in detail with reference to the accompanying drawings. Specific operation methods, function descriptions, and the like in method embodiments may also be applied to apparatus embodiments or system embodiments.

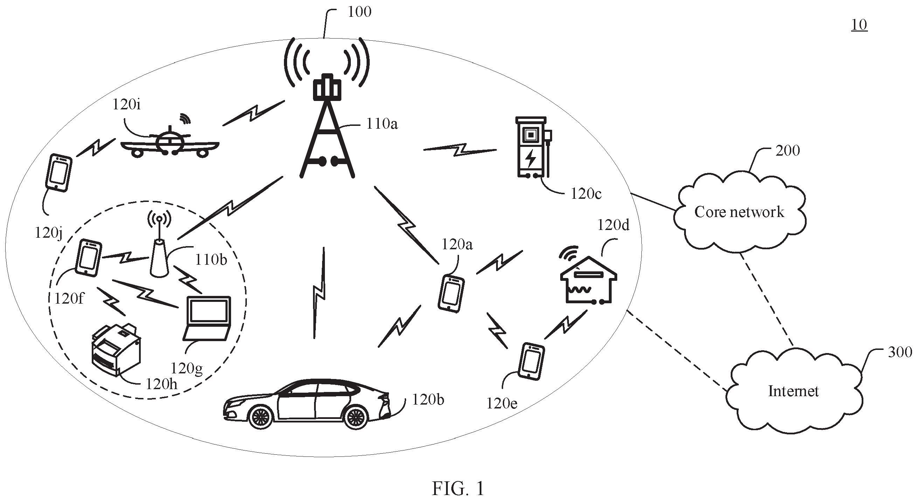

FIG. 1 is a diagram of a possible and non-limiting system. As shown in FIG. 1, the communication system 10 includes a radio access network (radio access network, RAN) 100 and a core network (core network, CN) 200. Optionally, an internet 300 is further included.

The RAN 100 includes at least one RAN node (for example, 110a and 110b in FIG. 1, which may be collectively referred to as 110) and at least one terminal (for example, 120a to 120j in FIG. 1, which may be collectively referred to as 120). The RAN 100 may also include another RAN node, for example, a wireless relay device and/or a wireless backhaul device (not shown in FIG. 1).

The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network device and a logical function of the radio access network.

The RAN 100 may be a cellular system related to a 3rd generation partnership project (3rd generation partnership project, 3GPP), for example, a 4th generation (4th generation, 4G) mobile communication system, a 5th generation (5th generation, 5G) mobile communication system, or a future-oriented evolved system, for example, a 6th generation (6th generation, 6G) mobile communication system. The RAN 100 may alternatively be an open access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates the foregoing two or more systems.

The RAN node 110 may also be referred to as an access network device, a RAN entity, an access node, or the like sometimes, and forms a part of the communication system, to help the terminal implement radio access. In subsequent descriptions of this application, unless otherwise specified, the "access network device" is used for description. A plurality of RAN nodes 110 in the communication system 10 may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. Sometimes, both the RAN node 110 and the terminal 120 are referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next-generation NodeB (next-generation NodeB, gNB), a next-generation base station in a 6G mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or some functions of the RAN node in embodiments of this application may alternatively be implemented by using a software function running on hardware, or may be implemented by using a virtualization function instantiated on a platform (for example, a cloud platform). Alternatively, the RAN node in embodiments of this application may be a logical node, a logical module, or software that can implement all or some functions of the RAN node.

In another possible scenario, a plurality of RAN nodes coordinate to assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality (virtual reality, VR), augmented reality (augmented reality, AR), industrial control, autonomous driving, telemedicine, a smart grid, smart furniture, a smart office, smart wearable, smart transportation, and a smart city. The terminal may be a mobile phone, a head-mounted display device, a tablet computer, a computer having a wireless transceiver function, a wearable device, a vehicle, an uncrewed aerial vehicle, a helicopter, an airplane, a ship, a robot, a mechanical arm, a smart home device, or the like. A device form of the terminal is not limited in embodiments of this application.

During downlink transmission, the access network device may send downlink data to the terminal. The terminal may determine whether the downlink data is correctly received. If the downlink data is correctly received, a hybrid automatic repeat request (hybrid automatic repeat request, HARQ) feedback sent by the terminal to the access network device is a positive acknowledgement (acknowledgement, ACK). If a reception error of the downlink data occurs, a HARQ feedback sent by the terminal to the access network device is a negative acknowledgement (negative acknowledgement, NACK). When receiving the NACK, the access network device retransmits the downlink data to the terminal.

In a mobile cellular network, when a terminal moves from coverage of one cell to another cell, the terminal needs to perform a cell handover. Before the handover, the terminal needs to measure a signal of a neighboring cell, to determine when the terminal performs the handover and specifically which cell to hand over to. Measurement is classified into intra-frequency measurement (intra-frequency measurement) and inter-frequency measurement (inter-frequency measurement). Intra-frequency measurement indicates that a cell (which may be referred to as a serving cell) on which the terminal currently camps and a target cell to be measured are on a same carrier frequency. Inter-frequency measurement indicates that a cell on which the terminal currently camps and a target cell to be measured are on different carrier frequencies. During intra-frequency measurement, the terminal may perform measurement by using a reference signal inserted during data transmission, without affecting data receiving and sending. For inter-frequency measurement, a simple manner is as follows: Two radio frequency receivers are installed in the terminal, respectively corresponding to a frequency of the current cell and a frequency of the target cell. However, this may cause problems such as mutual interference between different frequencies and a cost increase of the terminal. Therefore, a measurement gap (measurement gap, MG) solution is proposed in a 3GPP. An MG is a reserved period of time. In the reserved period of time, the terminal does not transmit other signals or data except some important signals (for example, signals related to an access procedure). The terminal tunes a frequency of a receiver to the frequency of the target cell to perform inter-frequency measurement. When the MG ends, the terminal tunes the frequency of the receiver back to the frequency of the current cell. Duration during which the terminal suspends a service of a serving cell to measure an inter-frequency target cell is referred to as an MG.

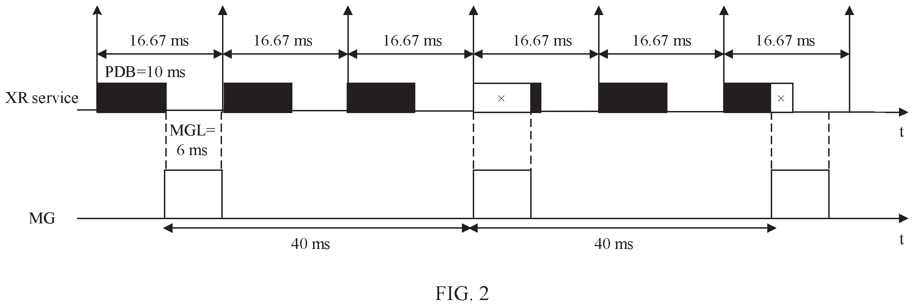

In some scenarios, time when the downlink data is retransmitted may overlap or conflict with the MG. Because a priority of the MG is high, the terminal preferentially performs inter-frequency measurement. As a result, reception of the retransmitted downlink data cannot be ensured, and reliability of a terminal service is affected. An extended reality (extended reality, XR) service is used as an example. As shown in FIG. 2, a cycle during which the XR service reaches the terminal is 16.67 milliseconds (millisecond, ms). In other words, the terminal receives the XR service once every 16.67 ms. In one cycle, a packet delay budget (packet delay budge, PDB) of the XR service is 10 ms. In other words, in a cycle of 16.67 ms, the terminal completes receiving the XR service within 10 ms. If a cycle of the MG is 40 ms, and a measurement gap length (measurement gap length, MGL) of one MG is 6 ms, one MG exists at an interval of 40 ms, and duration of the MG is 6 ms. As shown in FIG. 2, the XR service in a fourth cycle and the XR service in a sixth cycle overlap with the duration of the MG. According to a current design, in a time period during which overlapping occurs, the terminal preferentially performs inter-frequency measurement, which affects the terminal's reception of the XR service retransmitted in the fourth cycle and the sixth cycle, and further affects reliability of the XR service.

In view of this, an embodiment of this application provides an inter-frequency measurement method. A principle of the inter-frequency measurement method is as follows: When a terminal needs to receive retransmitted downlink data, inter-frequency measurement is skipped, and the terminal preferentially receives the retransmitted downlink data, thereby ensuring reception of the retransmitted downlink data, and ensuring reliability of a terminal service. It may be understood that the solution in this embodiment of this application is not limited to a scenario in which a low-latency service such as an XR service is applied, and the solution in this embodiment of this application may also be applied to a high-latency service.

For ease of understanding and description, the following describes a method in embodiments of this application by using interaction between a terminal and an access network device as an example. However, this should not constitute any limitation on an execution body of the method in embodiments of this application. For example, alternatively, the method performed by the terminal may be performed by a module (for example, a circuit, a chip, or a chip system) of the terminal, or may be implemented by a logical node, a logical module, or software that can implement all or some functions of the terminal. Alternatively, the method performed by the access network device may be performed by a module (for example, a circuit, a chip, or a chip system) of the access network device, or may be implemented by a logical node, a logical module, or software that can implement all or some functions of the access network device.

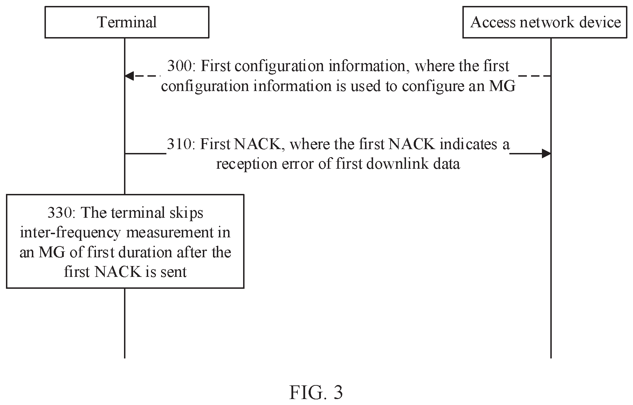

FIG. 3 is an interaction diagram of an inter-frequency measurement method according to an embodiment of this application. In the method, a terminal skips inter-frequency measurement in an MG of first duration after a first NACK is sent. As shown in FIG. 3, the method includes the following steps.

Step 300: An access network device sends first configuration information to the terminal, and the terminal receives the first configuration information from the access network device, where the first configuration information is used to configure the MG.

For example, the first configuration information includes at least one of the following parameters: a measurement gap repetition period (measurement gap repetition period, MGRP), a gap offset (gapOffset), a measurement gap length (measurement gap length, MGL), or the like. The MGRP indicates a cycle that is of the MG and that is configured in the first configuration information. For example, the cycle of the MG may be 20 ms, 40 ms, 80 ms, or 160 ms. For example, one frame occupies 10 ms, one frame includes 10 subframes, and one subframe occupies 1 ms. If the cycle of the MG is 40 ms, one MG exists at an interval of four frames. In the descriptions of this application, the "frame" may also be referred to as a "system frame", and descriptions of the "frame" and the "system frame" are not distinguished, and the "frame" and the "system frame" may be replaced with each other. The gapOffset is used to determine a start subframe of a 1^{st} MG. For example, the start subframe of the 1^{st} MG satisfies the following:
SFN mod T=FLOOR(gapOffset/10); T=MGRP/10; and the start subframe=gapOffset mod 10.

SFN represents a system frame number (system frame number, SFN). In the foregoing condition, the SFN specifically represents an SFN of a frame in which the 1^{st} MG is located. The start subframe indicates a start subframe that is occupied by the 1^{st} MG and that is in the frame corresponding to the SFN. FLOOR represents rounding down. mod represents a modulo operation.

For example, a value range of the gapOffset may be 0 to MGRP-1. For example, if a value of the MGRP is 20 ms, the value range of the gapOffset is 0 to 19. The MGL indicates duration that is of the MG and that is configured in the first configuration information. The MGL may be in a unit of millisecond. For example, a value of the MGL may be 1.5 ms, 3 ms, 3.5 ms, 4 ms, 5.5 ms, 6 ms, or the like.

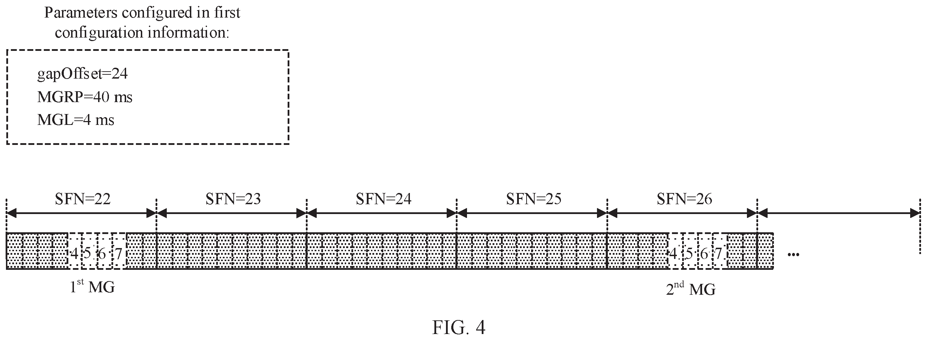

For example, as shown in FIG. 4, the parameters configured in the first configuration information are as follows: gapOffset=24, MGRP=40 ms, and MGL=4 ms. Based on the foregoing description, the SFN of the frame in which the 1^{st} MG is located satisfies the following: SFN mod T=FLOOR(gapOffset/10); and T=MGRP/10. It can be determined that the SFN of the frame in which the 1^{st} MG is located is 22. In FIG. 4, one frame occupies 10 ms, one frame includes 10 subframes, and one subframe occupies 1 ms. In the frame corresponding to the SFN being 22, the start subframe of the 1^{st} MG satisfies the following: the start subframe=gapOffset mod 10. By substituting the parameter gapOffset=24, it can be determined that, in the frame corresponding to the SFN being 22, the start subframe of the 1^{st} MG is a subframe 4. The MGL configured in the first configuration information is 4 ms. Therefore, in the frame corresponding to the SFN being 22, the 1^{st} MG occupies four subframes, and the four subframes are subframes 4 to 7 respectively. The MGRP configured in the first configuration information is 40 ms, and a 2^{nd} MG is separated from the 1^{st} MG by four frames. Therefore, an SFN of a frame in which the 2^{nd} MG is located is 26, and the 2^{nd} MG specifically occupies a subframe 4 to a subframe 7 of the frame corresponding to the SFN being 26. By analogy, an SFN of a frame in which a 3^{rd} MG is located is 30 and so on. This is not enumerated and described in detail.

In an implementation, the access network device may configure the parameters of the MG for the terminal based on radio resource control (radio resource control, RRC) signaling. For example, the access network device may send RRC signaling to the terminal, and the terminal receives the RRC signaling from the access network device, where the RRC signaling includes the first configuration information and the like.

In another implementation, the parameters of the MG are predefined. For example, the parameters of the MG are preset or specified in a protocol. The terminal may determine a time domain position of the MG based on the predefined parameters of the MG. In this implementation, step 300 does not need to be performed. In this embodiment of this application, step 300 may be performed, or step 300 may not be performed. In other words, step 300 is optional.

Step 310: The terminal sends the first NACK to the access network device, and the access network device receives the first NACK from the terminal, where the first NACK indicates a reception error of first downlink data.

In an implementation, the access network device sends the first downlink data to the terminal, and the terminal receives the first downlink data from the access network device. The terminal determines whether there is a reception error of the first downlink data. For example, the reception error of the first downlink data includes a decoding error of the first downlink data, a demodulation error of the first downlink data, and/or the like. It may be understood that the reception error of the first downlink data may be replaced with a receiving failure of the first downlink data or the like. When the reception error of the first downlink data occurs, the terminal may send the first NACK to the access network device. When the access network device receives the first NACK from the terminal, the access network device may retransmit the first downlink data to the terminal.

Step 330: The terminal skips inter-frequency measurement in an MG of first duration after the first NACK is sent.

In the description of this application, "skipping inter-frequency measurement" may be replaced with "not performing inter-frequency measurement". In an implementation, a time point when or after the terminal sends the first NACK may be used as a start time point. The terminal skips inter-frequency measurement in the first duration after the start time point. In other words, the terminal does not perform inter-frequency measurement in the first duration after the start time point. For example, there may be one or more MGs in the first duration after the terminal sends the first NACK. In this embodiment of this application, the terminal may deactivate or cancel the one or more MGs. The terminal does not perform inter-frequency measurement in the one or more MGs. It may be understood that the first duration T may include a partial MG. In this case, the partial MG included in the first duration can be canceled or deactivated, and inter-frequency measurement may be normally performed in a remaining MG. Alternatively, the remaining MG is canceled or deactivated. In other words, the terminal does not perform inter-frequency measurement in the remaining MG.

In an implementation, the access network device may retransmit the first downlink data to the terminal in the first duration after the first NACK is received. The terminal receives the retransmitted first downlink data in the first duration after the first NACK is sent.

In this embodiment of this application, the first duration may be predefined, or may be configured by the access network device. For example, a value of the first duration may be predefined, or the access network device may configure the value of the first duration in a higher-layer parameter for the terminal. The value of the first duration may be absolute time. For example, the value of the first duration may be 20 ms, 40 ms, 80 ms, or the like. Alternatively, the value of the first duration may be in a unit of frame. For example, the value of the first duration may be 2 frames, 4 frames, 8 frames, or the like. In an implementation, the value of the first duration may be an integer multiple of an MG cycle. For example, when the MG cycle is 40 ms, the value of the first duration may be 80 ms. Alternatively, the first duration is associated with a first timer and a second timer below. For a specific process, refer to the following description.

According to the foregoing design, in a downlink communication scenario, when the reception error of the first downlink data occurs, the terminal sends the first NACK to the access network device. In a subsequent period of time (where the period of time is the first duration), the first downlink data is preferably retransmitted. For example, the access network device retransmits the first downlink data to the terminal in the first duration. The terminal may receive the retransmitted first downlink data in the first duration. The terminal does not perform inter-frequency measurement in the MG of the first duration, thereby ensuring reception of the retransmitted downlink data, and ensuring reliability of a terminal service.

To reduce power consumption of monitoring a physical downlink control channel (physical downlink control channel, PDCCH) by the terminal, a discontinuous reception (discontinuous reception, DRX) mechanism is proposed in a 3GPP.

### 1. Basic working principle of the DRX mechanism

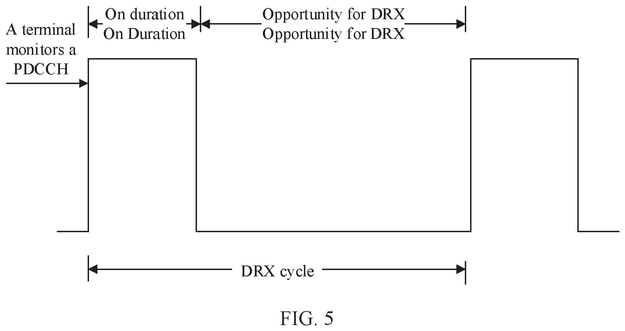

In the DRX mechanism, a DRX cycle (DRX cycle) can be configured for the terminal. As shown in FIG. 5, the DRX cycle is composed of two time periods: "On Duration" and "Opportunity for DRX". "On Duration" may be referred to as activation period, and "Opportunity for DRX" may be referred to as a DRX opportunity. In the description of this application, "on duration" and "activation period" are interchangeable, and "opportunity for DRX" and "sleep period" are interchangeable. In the "On Duration", the terminal monitors a PDCCH. In the "Opportunity for DRX", the terminal does not monitor a PDCCH, to reduce power consumption.

It may be understood that, in the "Opportunity for DRX", the terminal does not monitor the PDCCH, but the terminal may transmit data on another physical channel. For example, the terminal may receive downlink data on a physical downlink shared channel (physical downlink shared channel, PDSCH). For example, in a semi-persistent scheduling (semi-persistent scheduling, SPS) scenario, the terminal may receive downlink data or the like in a periodically configured downlink subframe through a PDSCH; and/or the terminal may send a HARQ feedback on a physical uplink control channel (physical uplink control channel, PUCCH).

### 2. Discontinuous reception-hybrid automatic repeat request-round-trip time-timer (drx-HARQ-RTT-Timer)

The access network device may send downlink data to the terminal. On a terminal side, if a reception error of the downlink data occurs, the terminal may send a NACK feedback to the access network device. When receiving the NACK feedback, the access network device may retransmit the downlink data to the terminal. From time when the terminal sends the NACK feedback to time when the terminal receives the retransmitted downlink data, there is round-trip time (round-trip time, RTT). The terminal does not receive the retransmitted downlink data within the RTT. Therefore, the terminal may not monitor a PDCCH within the RTT. In a DRX scenario, a timer drx-HARQ-RTT-Timer may be used, and duration of the timer may be considered as the RTT. In this embodiment of this application, when sending the NACK to the access network device, the terminal may start the timer drx-HARQ-RTT-Timer, where the terminal does not monitor the PDCCH during running of the timer drx-HARQ-RTT-Timer. The duration of the timer drx-HARQ-RTT-Timer may be considered as minimum duration that the terminal needs to wait from sending the NACK to receiving the retransmitted downlink data. The timer drx-HARQ-RTT-Timer is mainly used for transmission of downlink data. The timer drx-HARQ-RTT-Timer is also referred to as a drx-HARQ-RTT-Timer downlink (downlink, DL).

### 3. Discontinuous reception-retransmission-timer (drx-RetransmissionTimer)

When the timer drx-HARQ-RTT-Timer expires, the terminal starts the timer drx-RetransmissionTimer. During running of the timer drx-RetransmissionTimer, the terminal monitors a PDCCH. Duration of the timer drx-RetransmissionTimer may be considered as maximum duration for the terminal to wait for retransmission. During running of the timer drx-RetransmissionTimer, the PDCCH monitored by the terminal may be a PDCCH used to schedule downlink data retransmission. For example, the PDCCH carries downlink control information, and the downlink control information is used to schedule downlink data retransmission of the terminal. The duration of the timer drx-HARQ-RTT-Timer and the duration of the timer drx-RetransmissionTimer may be in a unit of subframe. The timer drx-RetransmissionTimer is also referred to as a drx-RetransmissionTimer DL.

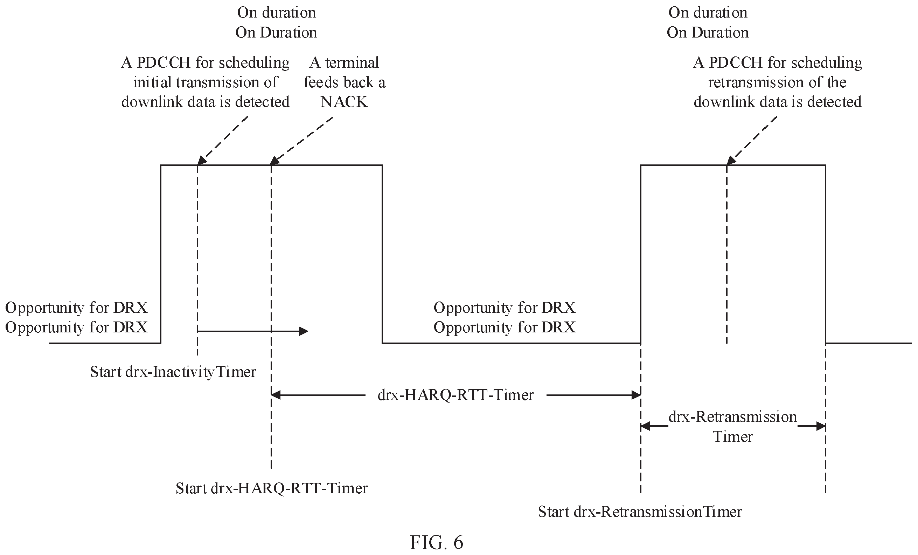

In an implementation, as shown in FIG. 6, in an "On Duration" time period of a DRX cycle, the terminal detects a PDCCH used to schedule initial transmission of downlink data. The terminal starts a timer discontinuous-reception-inactivity-timer (drx-InactivityTimer). During running of the timer drx-InactivityTimer, the terminal monitors the PDCCH until the timer expires. In subsequent descriptions of this application, the timer drx-InactivityTimer is not involved, and details are not described again. The terminal receives initially transmitted downlink data according to scheduling of the detected PDCCH. If a reception error of the downlink data occurs, the terminal sends a NACK to the access network device. When sending the NACK to the access network device, the terminal starts the timer drx-HARQ-RTT-Timer, where the terminal does not monitor the PDCCH during running of the timer. When the timer drx-HARQ-RTT-Timer expires, the terminal starts the timer drx-RetransmissionTimer, where the terminal monitors a PDCCH during running of the timer.

The method in the procedure in FIG. 3 may be applied to the DRX scenario. The method in the procedure in FIG. 3 further includes: Upon transmission of the first NACK to the access network device, the terminal starts the first timer; and upon expiry of the first timer, the terminal starts the second timer. During running of the first timer, monitoring a PDCCH is skipped. For example, during running of the first timer, the terminal does not monitor the PDCCH. The first timer may be the timer drx-HARQ-RTT-Timer. During running of the second timer, a PDCCH is monitored. For example, during running of the second timer, the terminal monitors the PDCCH. The second timer may be the timer drx-RetransmissionTimer. When the access network device receives the first NACK from the terminal, the access network device starts the first timer; and upon expiry of the first timer, the access network device starts the second timer. During running of the first timer, the access network device does not send the downlink control information to the terminal on the PDCCH. During running of the second timer, the downlink control information is sent to the terminal on the PDCCH, where the downlink control information is used to schedule retransmission of the first downlink data.

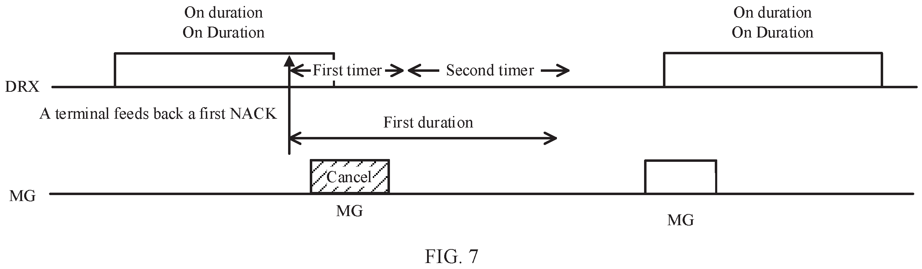

In an implementation, the first duration is equal to a sum of duration of the first timer and duration of the second timer. For example, the terminal skips inter-frequency measurement in an MG during running of the first timer and the second timer. For example, the terminal may receive the first configuration information from the access network device, and determine, based on the first configuration information, the configured MG. When the reception error of the first downlink data occurs, the terminal sends the first NACK to the access network device. As shown in FIG. 7, in a DRX scenario, upon transmission of the first NACK to the access network device, the terminal starts the first timer; and upon expiry of the first timer, the terminal starts the second timer. The first duration is equal to the sum of the duration of the first timer and the duration of the second timer. The terminal does not perform inter-frequency measurement in the MG of the first duration. Upon reception of the first NACK from the terminal, the access network device starts the first timer. Upon expiry of the first timer, the access network device starts the second timer. The access network device may retransmit the first downlink data to the terminal in the first duration during running of the first timer and the second timer. For example, during running of the first timer, the access network device may not retransmit the first downlink data to the terminal. During running of the second timer, the access network device may retransmit the first downlink data to the terminal. Specifically, the access network device may send, to the terminal on the PDCCH, control information for scheduling retransmission of the first downlink data. The terminal receives the retransmitted first downlink data according to scheduling of the control information. In an MG after the first duration, the terminal may normally perform inter-frequency measurement. For example, the terminal may tune a frequency of a receiver to a frequency of a target cell to be measured. The terminal receives a reference signal of the target cell, and determines a measurement result of the target cell based on the reference signal.

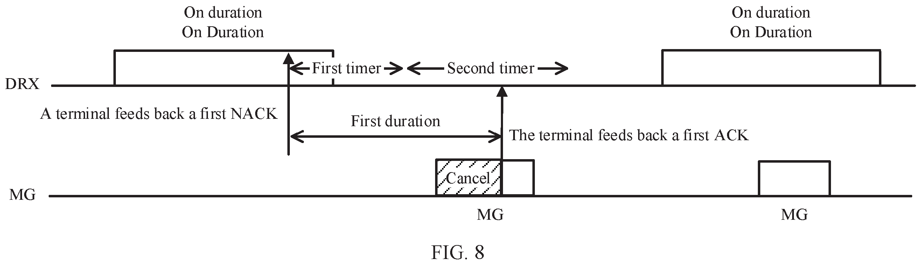

In another implementation, the first duration is less than a sum of duration of the first timer and duration of the second timer. For example, a specific value of the first duration depends on time when the terminal sends a first ACK. For example, as shown in FIG. 8, in a DRX scenario, upon transmission of the first NACK to the access network device, the terminal starts the first timer. Upon expiry of the first timer, the terminal starts the second timer. During running of the second timer, the access network device may send the retransmitted first downlink data to the terminal. The terminal may decode the retransmitted first downlink data; and when the retransmitted first downlink data is correctly received, the terminal may send the first ACK to the access network device. In an MG after the first ACK is sent, the terminal may normally perform inter-frequency measurement. In this implementation, a time interval from time when the terminal starts the first timer to time when the terminal sends the first ACK may be defined as the first duration. Because the terminal sends the first ACK to the access network device during running of the second timer, the first duration is less than the sum of the duration of the first timer and the duration of the second timer.

According to the foregoing design, during running of the second timer, if the terminal correctly receives the retransmitted first downlink data, the terminal immediately resumes inter-frequency measurement in the MG after sending the first ACK to the access network device, without waiting until the second timer expires before resuming inter-frequency measurement in the MG. This ensures that the terminal retransmits data, and reduces waiting time of inter-frequency measurement performed by the terminal.

In the method in the procedure in FIG. 3, there is a timer, and the timer is referred to as a third timer. For example, the third timer may be referred to as a first measurement gap-timer (measurementgap-timer). Because the third timer is mainly used for downlink data transmission, the third timer may be referred to as a second measurement gap-timer downlink (measurementgap-timer DL). When the solution is applied to the DRX scenario, the third timer may also be referred to as a first drx-measurementgap-timer. Upon transmission of the first NACK to the access network device, the terminal may start the third timer. Duration of the third timer may be predefined, or may be configured by the access network device.

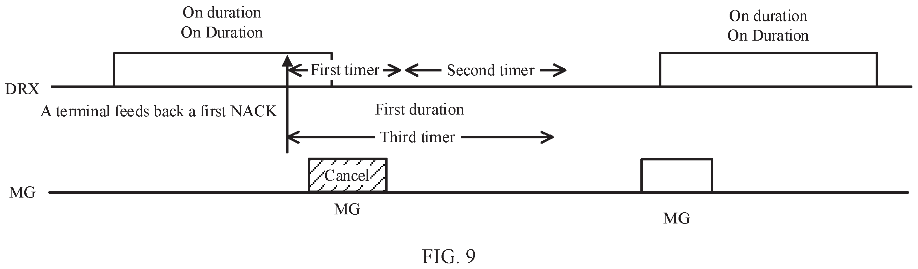

In an implementation, the first duration is equal to the duration of the third timer. In other words, the terminal skips inter-frequency measurement in an MG during running of the third timer. For example, as shown in FIG. 9, when the reception error of the first downlink data occurs on the terminal, the terminal sends the first NACK to the access network device, and the terminal starts the third timer. During running of the third timer, the terminal skips the MG and does not perform inter-frequency measurement. When the third timer expires, the terminal may normally perform inter-frequency measurement based on an MG. When the access network device receives the first NACK from the terminal, the access network device may start the third timer. For the access network device, during running of the third timer, the access network device may normally receive and send data. For example, the access network device may retransmit the first downlink data to the terminal. Further, the solution in this embodiment may be applied to the DRX scenario. In the DRX scenario, upon transmission of the first NACK to the access network device, the terminal starts the first timer. Upon expiry of the first timer, the terminal starts the second timer. Similarly, when the access network device receives the first NACK from the terminal, the access network device starts the first timer. Upon expiry of the first timer, the access network device starts the second timer. In the DRX scenario, upon transmission of the first NACK, the terminal may start the first timer and the third timer at the same time. When the access network device receives the first NACK, the access network device may start the first timer and the third timer at the same time.

In another implementation, the first duration is less than the duration of the third timer. For example, during running of the third timer, if the terminal correctly receives the retransmitted first downlink data, the terminal sends a first ACK to the access network device. After the terminal sends the first ACK to the access network device, the terminal may normally perform inter-frequency measurement without waiting until the third timer expires.

According to the foregoing design, during running of the third timer, if the terminal correctly receives the retransmitted first downlink data, the terminal immediately resumes inter-frequency measurement in the MG after sending the first ACK to the access network device, without waiting until the third timer expires before resuming inter-frequency measurement in the MG. This ensures that the terminal retransmits data, and reduces waiting time of inter-frequency measurement performed by the terminal.

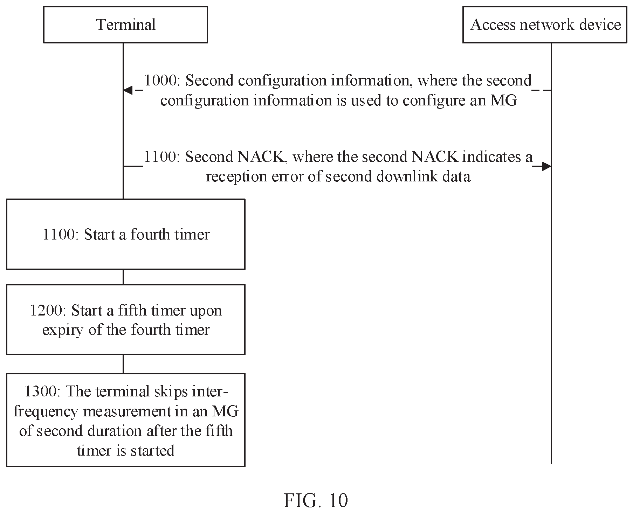

FIG. 10 is an interaction diagram of an inter-frequency measurement method according to an embodiment of this application. In the method, a terminal skips inter-frequency measurement in an MG of second duration after a fifth timer is started. As shown in FIG. 10, the method includes the following steps.

Step 1000: An access network device sends second configuration information to the terminal, and the terminal receives the second configuration information from the access network device, where the second configuration information is used to configure an MG.

In an implementation, the access network device may send RRC signaling to the terminal, where the RRC signaling includes the second configuration information. For a parameter included in the second configuration information, refer to the descriptions in FIG. 3. Alternatively, the MG is predefined, and the terminal may determine the MG based on a predefined configuration. In this case, step 1000 may not be performed. Step 1000 is optional.

Step 1100: The terminal sends a second NACK to the access network device, and starts a fourth timer.

Step 1200: Upon expiry of the fourth timer, the terminal starts a fifth timer.

In an implementation, the access network device sends second downlink data to the terminal, and the terminal receives the second downlink data from the access network device. When a reception error of the second downlink data occurs, the terminal sends the second NACK to the access network device, where the second NACK indicates the reception error of the second downlink data. The terminal starts the fourth timer, where monitoring a PDCCH is skipped during running of the fourth timer. The fourth timer may be a drx-HARQ-RTT-Timer. Upon expiry of the fourth timer, the terminal starts the fifth timer, where PDCCH monitoring is performed during a running period of the fifth timer. The fifth timer may be a drx-RetransmissionTimer. For the access network device, when the access network device receives the second NACK, the access network device may start the fourth timer. During running of the fourth timer, the access network device does not send downlink control information to the access network device on the PDCCH. Upon expiry of the fourth timer, the access network device starts the fifth timer. During running of the fifth timer, the access network device may send the downlink control information to the terminal on the PDCCH, where the downlink control information is used to schedule the terminal to receive retransmitted first downlink data.

Step 1300: The terminal skips inter-frequency measurement in the MG of the second duration after the fifth timer is started.

The second duration may be predefined, or configured by the access network device, or the second duration is associated with duration of the fifth timer or the like. The second duration may be absolute time. For example, a unit of the second duration may be millisecond. Alternatively, the second duration may be in a unit of frame or the like. The second duration may include one or more MGs. The terminal may cancel or deactivate the one or more MGs. The terminal skips inter-frequency measurement in the one or more MGs. In other words, the terminal does not perform inter-frequency measurement in the one or more MGs. It may be understood that the second duration may include a partial MG, and the terminal may cancel or deactivate the partial MG. In a remaining MG for the partial MG, the terminal may normally perform inter-frequency measurement; or the terminal may cancel or deactivate the remaining MG the like. In an implementation, the access network device may send control information to the terminal on the PDCCH in the second duration after the fifth timer is started, where the control information is used to schedule retransmission of the second downlink data. The terminal may receive the control information on the PDCCH in the second duration after the fifth timer is started, and the terminal receives the retransmitted second downlink data according to scheduling of the control information.

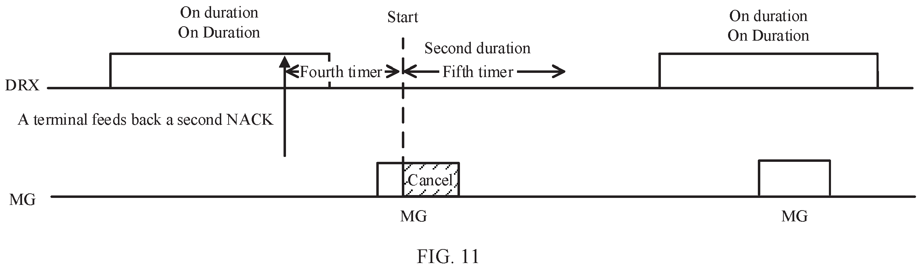

In an implementation, the second duration is equal to the duration of the fifth timer. For example, the terminal receives the second configuration information from the access network device, and the terminal determines the MG based on the second configuration information. The terminal receives the second downlink data from the access network device. As shown in FIG. 11, when the reception error of the second downlink data occurs, the terminal sends the second NACK to the access network device, and the terminal starts the fourth timer. Upon expiry of the fourth timer, the terminal starts the fifth timer. During running of the fifth timer, inter-frequency measurement is skipped in the corresponding MG. In other words, the corresponding MG is canceled or deactivated during running of the fifth timer. In the example shown in FIG. 11, during running of the fifth timer, a partial MG is included, the terminal cancels the partial MG, and the terminal does not perform inter-frequency measurement in the partial MG. For the MG, the terminal normally performs inter-frequency measurement in a remaining MG except the partial MG.

In another implementation, the second duration is less than the duration of the fifth timer. For example, during running of the fifth timer, when the terminal receives the retransmitted second downlink data, and the retransmitted second downlink data is correctly received, the terminal may send a second ACK to the access network device. After the terminal sends the second ACK to the access network device, the terminal may normally perform inter-frequency measurement based on the MG without waiting until the fifth timer expires. In other words, the second duration is equal to a time interval from time when the fifth timer is started to time when the terminal sends the second ACK.

According to the foregoing design, during running of the fifth timer, when the terminal receives the retransmitted second downlink data, if the retransmitted second downlink data is correctly received, the terminal sends the second ACK to the access network device. Then, the terminal may normally perform inter-frequency measurement based on the MG, without waiting until the fifth timer expires before performing inter-frequency measurement. This ensures that the terminal retransmits data, and reduces waiting time of inter-frequency measurement performed by the terminal.

In the method in the procedure in FIG. 10, there is a sixth timer, and duration of the sixth timer is predefined, or is configured by the access network device. The sixth timer may be referred to as a second drx-measurementgap-timer or a second drx-measurementgap-timer DL. Upon starting of the fifth timer, the terminal starts the sixth timer. Alternatively, the description is as follows: Upon expiry of the fourth timer, the terminal starts the fifth timer and the sixth timer at the same time. A relationship between the duration of the fifth timer and the duration of the sixth timer is not limited. For example, the duration of the fifth timer is equal to the duration of the sixth timer, or the duration of the fifth timer is less than the duration of the sixth timer, or the duration of the fifth timer is greater than the duration of the sixth timer.

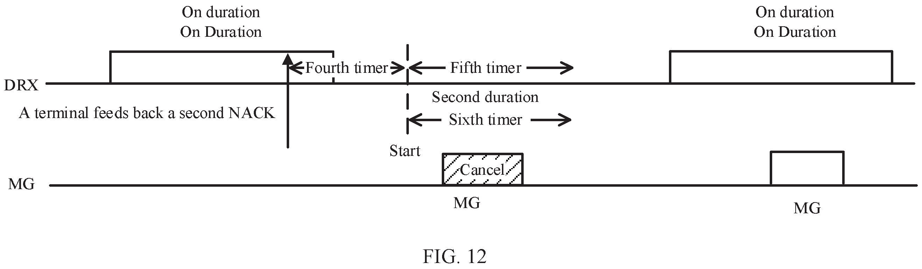

In an implementation, the second duration is equal to duration of a sixth timer. For example, as shown in FIG. 12, when the reception error of the second downlink data occurs, the terminal sends the second NACK to the access network device. When the terminal sends the second NACK to the access network device, the terminal starts the fourth timer. Upon expiry of the fourth timer, the terminal starts the fifth timer and the sixth timer at the same time. In an MG during running of the sixth timer, the terminal cancels or deactivates the corresponding MG, and skips inter-frequency measurement.

In a downlink communication scenario, when the reception error of the second downlink data occurs, the terminal sends the second NACK to the access network device, and the terminal starts the fourth timer. During running of the fourth timer, the terminal does not monitor the PDCCH. Upon expiry of the fourth timer, the terminal starts the fifth timer and the sixth timer. During running of the sixth timer, the terminal skips the MG and does not perform inter-frequency measurement.

In another implementation, the second duration is less than duration of a sixth timer. For example, during running of the sixth timer, the terminal receives the retransmitted second downlink data. When the retransmitted second downlink data is correctly received, the terminal sends a second ACK to the access network device. After the terminal sends the second ACK to the access network device, the terminal may perform inter-frequency measurement based on the MG. In other words, the terminal does not need to wait until the sixth timer expires before performing inter-frequency measurement. During running of the sixth timer, if the terminal sends the second ACK to the access network device, the terminal may perform inter-frequency measurement immediately after sending the second ACK. The second duration is equal to a time interval from time when the sixth timer is started to time when the terminal sends the second ACK.

According to the foregoing design, in a downlink communication scenario, the terminal does not need to wait until the sixth timer expires before performing inter-frequency measurement. During running of the sixth timer, if the terminal sends the second ACK to the access network device, the terminal may perform inter-frequency measurement immediately after the terminal sends the second ACK. The terminal preferentially receives the retransmitted downlink data, thereby ensuring transmission of the retransmitted data, and further reducing waiting time of inter-frequency measurement performed by the terminal.

It may be understood that, in this embodiment of this application:
1. Duration of a timer is a time interval from time when the timer is started to time when the timer expires. The duration of the timer may be equal to running duration of the timer. For example, the duration of the timer is 10 ms. In a normal scenario, it is considered that the timer expires after the timer runs for 10 ms from the time when the timer is started. The duration of the timer and the running duration of the timer are both 10 ms. Alternatively, in some special scenarios, during running of the timer, affected by some factors, the timer is forced to stop running. In this case, the running duration of the timer is less than the duration of the timer. For example, the duration of the timer is 10 ms; and 5 ms after the timer is started, the timer is forced to stop running. In this case, the running duration of the timer is 5 ms, and the running duration 5 ms of the timer is not equal to the duration 10 ms of the timer.
2. The procedures in FIG. 3 and FIG. 10 may include fewer steps or more steps than those in the schematic flowcharts or text descriptions.
3. In embodiments of this application, that "(for example, a terminal) receives information from (for example, an access network device)" may be understood as that a source end of the information is the access network device, and a destination end of the information is the terminal, and may include the following: The terminal directly or indirectly receives the information from the access network device. Necessary processing, for example, a format change, may be performed on the information between the source end and the destination end to which the information is sent, but the destination end can understand valid information from the source end. A similar expression in this application may be understood similarly, and details are not described herein again.

In the foregoing embodiments provided in this application, the methods provided in embodiments of this application are separately described from a perspective of interaction between the access network device and the terminal. To implement functions in the methods provided in embodiments of this application, the access network device, the terminal, or the like may include a hardware structure and/or a software module, and implement the functions in a form of the hardware structure, the software module, or a combination of the hardware structure and the software module. Whether a function in the foregoing functions is performed in the form of the hardware structure, the software module, or the combination of the hardware structure and the software module depends on particular applications and design constraints of the technical solutions.

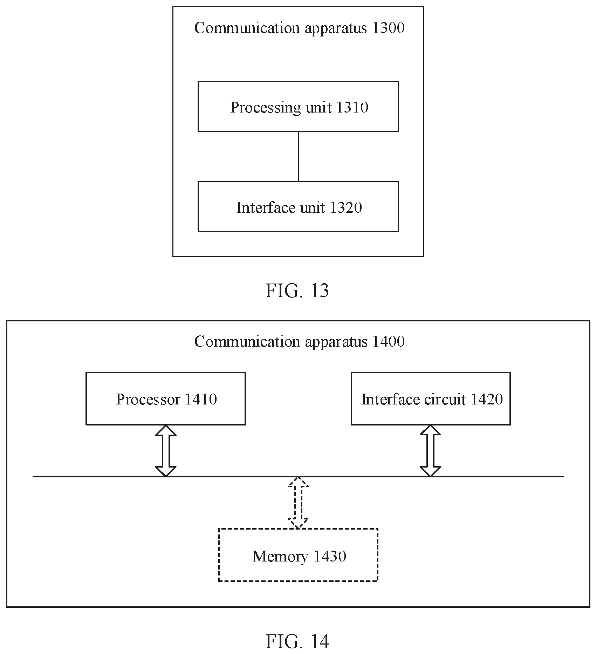

FIG. 13 and FIG. 14 are diagrams of structures of possible apparatuses according to embodiments of this application. These communication apparatuses may implement functions of the access network device or the terminal in the foregoing method embodiments. Therefore, beneficial effects described in the foregoing method embodiments may also be achieved.

As shown in FIG. 13, the communication apparatus 1300 includes a processing unit 1310 and an interface unit 1320.

For example, the processing unit 1310 may also be referred to as a processor, a processing board, a processing module, a processing apparatus, or the like. The interface unit 1320 may also be referred to as a transceiver, a transceiver machine, a transceiver module, a transceiver apparatus, a communication unit, or the like. Further, the interface unit 1320 may include at least one of a sending unit or a receiving unit. The sending unit and the receiving unit may be integrated together, or may be two independent units, or the like.

In a design, the communication apparatus 1300 is configured to implement a function of the terminal or the access network device in FIG. 3.

For example, when the communication apparatus 1300 is configured to implement a function of the terminal in FIG. 3, the interface unit 1320 is configured to receive first configuration information from the access network device, where the first configuration information is used to configure a measurement gap MG; the interface unit 1320 is further configured to send a first negative acknowledgement NACK to the access network device, where the first NACK indicates a reception error of the first downlink data; and the processing unit 1310 is configured to skip inter-frequency measurement in an MG of first duration after the first NACK is sent.

For example, when the communication apparatus 1300 is configured to implement a function of the access network device in FIG. 3:

for example, the interface unit 1320 is configured to send first configuration information to the terminal, where the first configuration information is used to configure a measurement gap MG; the interface unit 1320 is further configured to receive a first negative acknowledgement NACK from the terminal, where the first NACK indicates a reception error of the first downlink data; and the processing unit 1310 is configured to control the interface unit 1320 to retransmit the first downlink data to the terminal in first duration after the first NACK is received.

In a design, the communication apparatus 1300 is configured to implement a function of the terminal or the access network device in FIG. 10.

For example, when the communication apparatus 1300 is configured to implement a function of the terminal in FIG. 10, the interface unit 1320 is configured to receive second configuration information from the access network device, where the second configuration information is used to configure a measurement gap MG; the interface unit 1320 is further configured to: send a second negative acknowledgement NACK to the access network device, and start a fourth timer, where physical downlink control channel PDCCH monitoring is skipped during a running period of the fourth timer, and the second NACK indicates a reception error of second downlink data; the processing unit 1310 is configured to: upon expiry of the fourth timer, start a fifth timer, where PDCCH monitoring is performed during a running period of the fifth timer; and the processing unit 1310 is further configured to skip inter-frequency measurement in an MG of second duration after the fifth timer is started.

For example, when the communication apparatus 1300 is configured to implement a function of the access network device in FIG. 10, the interface unit 1320 is configured to send second configuration information to the terminal, where the second configuration information is used to configure a measurement gap MG; the interface unit 1320 is further configured to: receive a second negative acknowledgement NACK from the terminal, and start a fourth timer, where physical downlink control channel PDCCH monitoring is skipped during a running period of the fourth timer, and the second NACK indicates a reception error of second downlink data; the processing unit 1310 is configured to: upon expiry of the fourth timer, start a fifth timer, where PDCCH monitoring is performed during a running period of the fifth timer; and the processing unit 1310 is configured to control the interface unit to retransmit the second downlink data to the terminal in second duration after the fifth timer is started.

For more detailed descriptions of the processing unit 1310 and the interface unit 1320, refer to the descriptions in the foregoing method embodiments. Details are not described herein again.

It may be understood that, in embodiments of this application, division into the units is an example, and is merely logical function division. During actual implementation, another division manner may be used. In addition, functional units in embodiments of this application may be integrated into one physical device (for example, a processor), or each functional unit may be an independent physical device, or two or more units may be integrated into one unit for implementation. The integrated unit may be implemented in a form of hardware, or implemented in a form of a software functional module, or the like.

FIG. 14 is a diagram of another structure of a communication apparatus 1400 according to an embodiment of this application. For example, the communication apparatus 1400 shown in FIG. 14 may be an implementation of a hardware circuit of the communication apparatus 1300 shown in FIG. 13. For ease of description, FIG. 14 shows only main parts of the communication apparatus.

As shown in FIG. 14, the communication apparatus 1400 includes a processor 1410 and an interface circuit 1420. The processor 1410 and the interface circuit 1420 are coupled to each other.

For example, the processor 1410 may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a transistor logic device, a hardware component, or any combination thereof. The general-purpose processor may be a microprocessor, or may be any conventional processor or the like. The interface circuit 1420 may be a transceiver, an input/output circuit, or the like.

Optionally, the communication apparatus 1400 may further include a memory 1430, configured to: store instructions to be executed by the processor 1410, store input data needed for running instructions by the processor 1410, or store data generated after the processor 1410 runs instructions. For example, the instructions may also be referred to as a computer program, computer program code, or the like.

For example, the memory 1430 may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well known in the art.

When the communication apparatus 1400 is configured to implement the method of the terminal or the access network device in FIG. 3 or FIG. 10, the processor 1410 is configured to implement a function of the processing unit 1310, and the interface circuit 1420 is configured to implement a function of the interface unit 1320.

In a design, the interface circuit 1420 is configured to: receive a signal from another communication apparatus other than the communication apparatus 1400, and transmit the signal to the processor 1410, or send a signal from the processor 1410 to another communication apparatus other than the communication apparatus; and the processor 1410 is configured to implement a function of the terminal or the access network device in FIG. 3 or FIG. 10 through a logic circuit or by executing code instructions.

An embodiment of this application further provides a communication apparatus. The communication apparatus includes a processor and a memory. The processor is coupled to the memory, and the processor is configured to implement a function of the terminal or the access network device in FIG. 3 or FIG. 10. For example, the processor may execute instructions in the memory, so that the communication apparatus implements one or more functions in the foregoing method embodiments, for example, a function implemented by the terminal or the access network device in FIG. 3 or FIG. 10. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be disposed in the terminal or the access network device in FIG. 3 or FIG. 10. Alternatively, the processor and the storage medium may exist in the terminal or the access network device in FIG. 3 or FIG. 10 as discrete components.

An embodiment of this application further provides a communication apparatus. The communication apparatus includes a processor, and the processor is configured to implement a function of the terminal or the access network device in FIG. 3 or FIG. 10.

An embodiment of this application further provides a computer-readable storage medium. The computer-readable storage medium stores instructions, and the instructions may also be referred to as a computer program, computer program code, or the like. The instructions are run on a computer, so that the computer performs a function of the terminal or the access network device in FIG. 3 or FIG. 10 in the foregoing method embodiments.

Optionally, the computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

An embodiment of this application further provides a computer program product. The computer program product includes a computer program or instructions. When the computer program or the instructions are run on a computer, the method of the terminal or the access network device in FIG. 3 or FIG. 10 is performed. For example, the computer program product includes one or more computer programs or instructions. When the computer program or the instructions are loaded and executed on the computer, all or some of the procedures or functions of the terminal or the access network device in FIG. 3 or FIG. 10 in embodiments of this application are performed.

It may be understood that all or some of the methods in embodiments of this application may be implemented by using software, hardware, firmware, or any other combination. When the software is used to implement the methods, all or some of the methods may be implemented in a form of a computer program product.

An embodiment of this application further provides a chip. The chip includes a processor, and the processor is coupled to a memory. The processor is configured to execute a computer program or instructions stored in the memory, so that the chip implements a function of the terminal or the access network device in FIG. 3 or FIG. 10. For example, the chip implements the function of the access network device. The chip may receive information from another module (for example, a radio frequency module or an antenna) of the access network device, and the information may be sent by the terminal to the access network device. Alternatively, the chip may send information to another module (for example, a radio frequency module or an antenna) in the access network device, and the information is sent by the access network device to the terminal.

An embodiment of this application further provides a communication system, including a first communication apparatus and a second communication apparatus.

The first communication apparatus may implement a function of the terminal in FIG. 3, and the second communication apparatus may implement a function of the access network device in FIG. 3. Alternatively, the first communication apparatus may implement a function of the terminal in FIG. 10, and the second communication apparatus may implement a function of the access network device in FIG. 10. For a specific structure of the first communication apparatus or the second communication apparatus, refer to the foregoing description, for example, the structure description in FIG. 13 or FIG. 14.

In descriptions of this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be in a singular form or a plural form. In the text descriptions of this application, the character "/" generally represents an "or" relationship between the associated objects; and "including at least one of A, B, or C" may represent: including A; including B; including C; including A and B; including A and C; including B and C; or including A, B, and C.

Various numbers and descriptions such as "first" and "second" in embodiments of this application are merely used for differentiation for ease of description, and are not intended to limit the scope of embodiments of this application. Sequence numbers of the foregoing processes do not mean an execution sequence, and the execution sequence of the processes should be determined based on functions and internal logic of the processes.

It is clear that a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A communication method, comprising:
receiving first configuration information from an access network device, wherein the first configuration information is used to configure a measurement gap MG;
sending a first negative acknowledgement NACK to the access network device, wherein the first NACK indicates a reception error of first downlink data; and
skipping inter-frequency measurement in an MG of first duration after the first NACK is sent.

2. The method according to claim 1, wherein the first duration is equal to a sum of duration of a first timer and duration of a second timer, physical downlink control channel PDCCH monitoring is skipped during a running period of the first timer, and PDCCH monitoring is performed during a running period of the second timer.

3. The method according to claim 1, wherein the first duration is less than a sum of duration of a first timer and duration of a second timer, PDCCH monitoring is skipped during a running period of the first timer, and PDCCH monitoring is performed during a running period of the second timer.

4. The method according to claim 2 or 3, further comprising:
upon transmission of the first NACK to the access network device, starting the first timer; and
upon expiry of the first timer, starting the second timer.

5. The method according to claim 1, wherein the first duration is equal to duration of a third timer, and the duration of the third timer is predefined, or is configured by the access network device.

6. The method according to claim 1, wherein the first duration is less than duration of a third timer, and the duration of the third timer is predefined, or is configured by the access network device.

7. The method according to claim 5 or 6, further comprising:
upon transmission of the first NACK to the access network device, starting the third timer.

8. A communication method, comprising:
receiving second configuration information from an access network device, wherein the second configuration information is used to configure a measurement gap MG;
sending a second negative acknowledgement NACK to the access network device, and starting a fourth timer, wherein physical downlink control channel PDCCH monitoring is skipped during a running period of the fourth timer, and the second NACK indicates a reception error of second downlink data;
upon expiry of the fourth timer, starting a fifth timer, wherein PDCCH monitoring is performed during a running period of the fifth timer; and
skipping inter-frequency measurement in an MG of second duration after the fifth timer is started.

9. The method according to claim 8, wherein the second duration is equal to duration of the fifth timer.

10. The method according to claim 8, wherein the second duration is less than duration of the fifth timer.

11. The method according to claim 8, wherein the second duration is equal to duration of a sixth timer, and the duration of the sixth timer is predefined, or is configured by the access network device.

12. The method according to claim 8, wherein the second duration is less than duration of a sixth timer, and the duration of the sixth timer is predefined, or is configured by the access network device.

13. The method according to claim 11 or 12, further comprising:
upon starting of the fifth timer, starting the sixth timer.

14. A communication apparatus, comprising:
an interface unit, configured to receive first configuration information from an access network device, wherein the first configuration information is used to configure a measurement gap MG; and
the interface unit is further configured to send a first negative acknowledgement NACK to the access network device, wherein the first NACK indicates a reception error of first downlink data; and
a processing unit, configured to skip inter-frequency measurement in an MG of first duration after the first NACK is sent.

15. The apparatus according to claim 14, wherein the first duration is equal to a sum of duration of a first timer and duration of a second timer, physical downlink control channel PDCCH monitoring is skipped during a running period of the first timer, and PDCCH monitoring is performed during a running period of the second timer.

16. The apparatus according to claim 14, wherein the first duration is less than a sum of duration of a first timer and duration of a second timer, PDCCH monitoring is skipped during a running period of the first timer, and PDCCH monitoring is performed during a running period of the second timer.

17. The apparatus according to claim 15 or 16, wherein the processing unit is further configured to:
upon transmission of the first NACK to the access network device, start the first timer; and
upon expiry of the first timer, start the second timer.

18. The apparatus according to claim 14, wherein the first duration is equal to duration of a third timer, and the duration of the third timer is predefined, or is configured by the access network device.

19. The apparatus according to claim 14, wherein the first duration is less than duration of a third timer, and the duration of the third timer is predefined, or is configured by the access network device.

20. The apparatus according to claim 18 or 19, wherein the processing unit is further configured to:
upon transmission of the first NACK to the access network device, start the third timer.

21. A communication apparatus, comprising:
an interface unit, configured to receive second configuration information from an access network device, wherein the second configuration information is used to configure a measurement gap MG; and
the interface unit is further configured to: send a second negative acknowledgement NACK to the access network device, and start a fourth timer, wherein physical downlink control channel PDCCH monitoring is skipped during a running period of the fourth timer, and the second NACK indicates a reception error of second downlink data; and
a processing unit, configured to: upon expiry of the fourth timer, start a fifth timer, wherein PDCCH monitoring is performed during a running period of the fifth timer; and
the processing unit is further configured to skip inter-frequency measurement in an MG of second duration after the fifth timer is started.

22. The apparatus according to claim 21, wherein the second duration is equal to duration of the fifth timer.

23. The apparatus according to claim 21, wherein the second duration is less than duration of the fifth timer.

24. The apparatus according to claim 21, wherein the second duration is equal to duration of a sixth timer, and the duration of the sixth timer is predefined, or is configured by the access network device.

25. The apparatus according to claim 21, wherein the second duration is less than duration of a sixth timer, and the duration of the sixth timer is predefined, or is configured by the access network device.

26. The apparatus according to claim 24 or 25, wherein the processing unit is further configured to:
upon starting of the fifth timer, start the sixth timer.

27. A computer-readable storage medium, wherein the computer-readable storage medium stores instructions; and when the instructions are run on a computer, the computer is enabled to perform the method according to any one of claims 1 to 7 or the method according to any one of claims 8 to 13.

28. A computer program product, comprising a computer program or instructions, wherein when the computer program or the instructions are run by an apparatus, the method according to any one of claims 1 to 7 is performed, or the method according to any one of claims 8 to 13 is performed.
